# EUROPEAN PATENT APPLICATION

(11) **EP 3 163 026 A1**
(43) Date of publication of application: **03.05.2017**
(21) Application number: 16195820.2
(22) Date of filing: 26.10.2016
(51) Int. Cl.: F01D 5/28

(54) **SYSTEMS AND METHODS FOR SUPERHYDROPHOBIC SURFACE ENHANCEMENT OF TURBINE COMPONENTS**

(30) Priority: 29.10.2015 US 201514926145
(71) Applicant: General Electric Company, Schenectady, NY 12345 (US)
(72) Inventor: FANDREI II, Theodore William, Schenectady, NC North Carolina 12345 (US)
(74) Representative: Pöpper, Evamaria

(57) **Abstract**

The present application provides a turbine engine component (110), preferably for use with a steam turbine engine (10). The component (110) includes a metal surface (150) and a superhydrophobic surface pattern (160) formed in the metal surface (150). In addition, a method of creating a superhydrophobic surface pattern (160) on a metal surface (150) of a turbine component (110) is described

## Description

### TECHNICAL FIELD

The present application relates generally to turbine engines and more particularly relates to systems and methods for superhydrophobic surface enhancement of turbine components, especially steam turbine components, for substantially self-cleaning surfaces with a reduced risk of corrosion.

### BACKGROUND OF THE INVENTION

Components in power generation systems such as the turbine rotor blades and turbine stator blades are often exposed to harsh, erosive service environments. These service environments may result in component erosion caused by, for example, water droplets and/or fine dust. The condensed water therein may contain elements that are known to contribute to environmentally assisted erosion. These issues may be exacerbated by the constant wet/dry cycling as the turbine is stopped and started. Erosion of the turbine blades thus may be problematic and may result in blade thinning, fatigue breakdown, and the like.

### SUMMARY OF THE INVENTION

The present application and the resultant patent thus provide a component, preferably for use with a steam turbine engine. The component may include a metal surface and a superhydrophobic surface pattern formed in the metal surface for a substantially self-cleaning surface.

The present application and the resultant patent further provide a method of creating a superhydrophobic surface pattern on a metal surface of a turbine component. The method may include the steps of positioning the turbine component about a laser, firing a pulsed energy beam from the laser to the metal surface of the turbine component, and forming the superhydrophobic surface pattern on the metal surface of the turbine component.

The present application and the resultant patent further provide a superhydrophobic surface enhancement system. The superhydrophobic surface enhancement system may include a short pulse laser and a turbine component. The short pulse laser creates the superhydrophobic surface pattern on a metal surface of the turbine component for a substantially self-cleaning surface.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a steam turbine engine used for driving a load.
Fig. 2 is a schematic diagram of a superhydrophobic surface enhancement system as may be described herein.
Fig. 3A is a schematic diagram of an example of a superhydrophobic surface treatment pattern.
Fig. 3B is a schematic diagram of an example of a superhydrophobic surface treatment pattern.
Fig. 3C is a schematic diagram of an example of a superhydrophobic surface treatment pattern.

### DETAILED DESCRIPTION

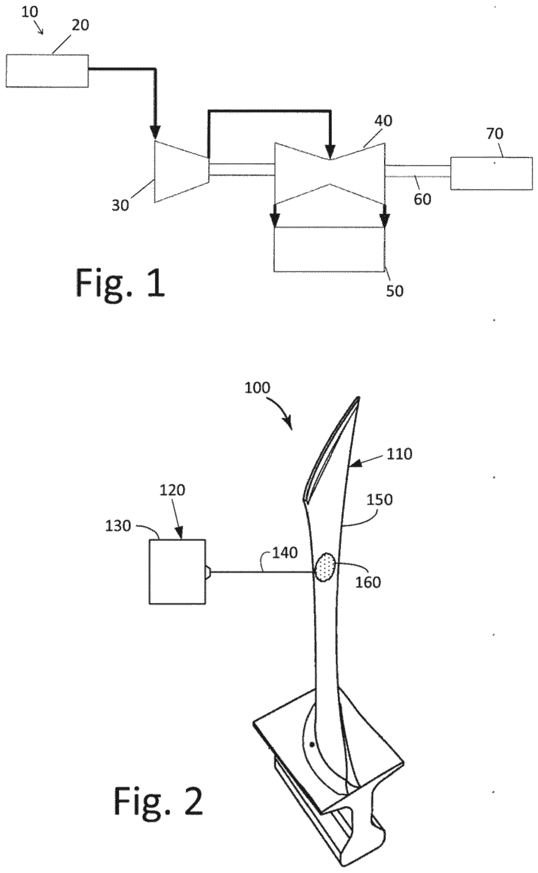

Referring now to the drawings, in which like numerals refer to like elements throughout the several views, Fig. 1 is schematic diagram of an example of a steam turbine engine 10 as may be used herein. The steam turbine engine 10 may include a steam generator 20. The steam generator 20 may provide steam to a high pressure section 30. The steam may expand within the high pressure section 30, exhaust from the high pressure section 30, and then pass to a low pressure section 40. In the low pressure section 40, the steam may again expand and then exhaust to a condenser 50. The high pressure section 30 and the lower pressure section 40 may drive one or more shafts 60. The shafts 60 may dive a load 70 such as an electrical generator and the like.

The steam turbine engine 10 may use a boiler fired by coal, nuclear reactions, natural gas, liquid fuels, various types of syngas, and/or other types of fuels and blends thereof. The steam turbine engine 10 may operate in a combined cycle application where waste heat from a gas turbine engine may be collected in a heat recovery stream generator to provide steam. The steam turbine engine 10 may be any one of a number of different gas turbine engines offered by General Electric Company of Schenectady, New York. The steam turbine engine 10 may have different configurations and may use other types of components. Other types of steam turbine engines also may be used herein. Multiple steam turbine engines, other types of turbines, and other types of power generation equipment also may be used herein together.

Fig. 2 shows an example of a superhydrophobic surface enhancement system 100 as may be described herein. The superhydrophobic surface enhancement system 100 may be used with a turbine component 110. The turbine component 110 may be a turbine rotor blade, a turbine stator blade, or any type of metal component subject to harsh operational conditions. The metal component may be made from a superalloy and the like. Different types of materials may be used herein. Other components and other configurations may be used herein.

The superhydrophobic surface enhancement system 100 may include an energy source 120. In this example, the energy source 120 may be a laser 130 and the like. More particularly, the laser 130 may be a femtosecond laser or an ultra-short pulse laser and the like. Other types of lasers 130 and other types of energy sources 120 may be used herein. The energy source 120 may direct a pulsed energy beam 140 onto a metal surface 150 of the turbine component 110. The energy beam 140 may create a superhydrophobic surface pattern 160 on the metal surface 150 of the turbine component 110 so as to modify the wetting properties and other properties of the metal surface 150. The superhydrophobic surface pattern 160 on the metal surface 150 of the turbine component 110 may extend for all or part of the turbine component 110. Different types of superhydrophobic surface patterns 160 may be produced in any suitable size, shape, or configuration.

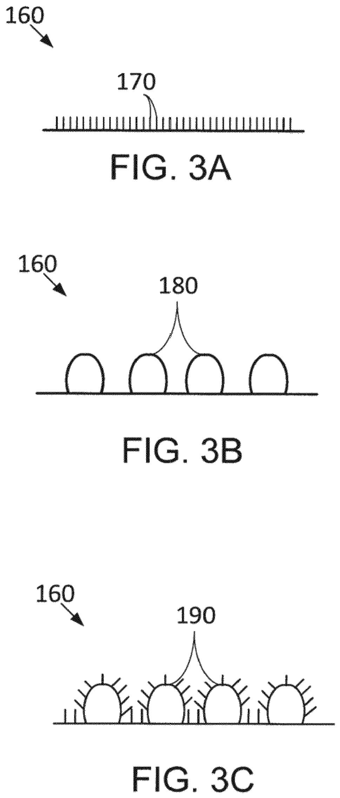

By way of example, the superhydrophobic surface pattern 160 may be in the form of a nanostructure pattern 170 as is shown in Fig. 3A, a microstructure pattern 180 as is shown in Fig. 3B, and/or a combined hierarchical pattern 190 as is shown in Fig. 3C. The nanostructure patterns 170 may have structures in the range of about 200 nm to about 2 µm. Other sizes also may be used. The microstructure patterns 180 may have structures in the range of about µm 10 to about 50 µm. Other sizes also may be used. The superhydrophobic surface patterns 160 may have a contact angle of greater than about fifty degrees (50°) or so and a low roll off angle. Structures with other types of suitable sizes, shapes, and configurations may be used herein. Combinations of different superhydrophobic surface patterns 160 may be used herein together on the turbine component 110.

The superhydrophobic surface patterns 160 may change or alter the ability of liquids to stick to or wet the metal surface 150 of the turbine component 110. Given such, the surface 150 may be less likely to retain particles in the liquid stream. The superhydrophobic surface pattern 160 thus may be considered self-cleaning so as to repel water and dust thereon. The reduction or elimination of the wettability of the metal surface 150 of the turbine component 110 likewise may reduce the risk of exposure to chemicals held in the liquid stream. This reduction or elimination also may reduce the risk of corrosion, rusting, and stress corrosion cracking. The rapid elimination of the finer water droplets also may reduce the droplet energy and, hence, impact erosion risk downstream. The use of the superhydrophobic surface patterns 160 also may lead to improved overall cleanliness of the metal surface 150 and therefore improve performance due to a reduced buildup of surface contaminants and/or debris. The superhydrophobic surface pattern 160 thus may improve turbine lifetime, reduce impact erosion rates, reduce environmentally assisted corrosion risks, reduce risk of rusting, provide cleaner surfaces, and provide overall improved performance.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

Various aspects and embodiments of the present invention are defined by the following clauses:
1. A component for use with a steam turbine engine, comprising:
   a metal surface; and
   a superhydrophobic surface pattern formed in the metal surface.
2. The component of clause 1, wherein the component comprises a rotor blade.
3. The component of clause 1, wherein the component comprises a stator blade.
4. The component of clause 1, wherein the superhydrophobic surface pattern comprises a nanostructure pattern.
5. The component of clause 4, wherein the nanostructure pattern comprises a structure of about 200 nm to 2 µm.
6. The component of clause 1, wherein the superhydrophobic surface pattern comprises a microstructure pattern.
7. The component of clause 6, wherein the microstructure patterns comprises a structure of about 10 to 50 µm.
8. The component of clause 1, wherein the superhydrophobic surface pattern comprises a hierarchical pattern.
9. The component of clause 1, wherein the superhydrophobic surface pattern is formed in the metal surface by an energy source.
10. The component of clause 1, wherein the superhydrophobic surface pattern is formed in the metal surface by a laser.
11. The component of clause 1, wherein the superhydrophobic surface pattern is formed in the metal surface by an ultra-short pulse laser.
12. A method of creating a superhydrophobic surface pattern on a metal surface of a turbine component, comprising:
   positioning the turbine component about a laser;
   firing a pulsed energy beam from the laser to the metal surface of the turbine component; and
   forming the superhydrophobic surface pattern on the metal surface of the turbine component.
13. The method of clause 12, wherein the step of forming the superhydrophobic surface pattern on the metal surface of the turbine component comprises forming a nanostructure pattern on the metal surface of the turbine component.
14. The method of clause 12, wherein the step of forming the superhydrophobic surface pattern on the metal surface of the turbine component comprises forming a microstructure pattern on the metal surface of the turbine component.
15. The method of clause 12, wherein the step of forming the superhydrophobic surface pattern on the metal surface of the turbine component comprises forming a hierarchical pattern on the metal surface of the turbine component.
16. A superhydrophobic surface enhancement system, comprising:
   a short pulse laser; and
   a turbine component;
   wherein the laser creates a superhydrophobic surface pattern on a metal surface of the turbine component.
17. The superhydrophobic surface enhancement system of clause 16, wherein the component comprises a rotor blade or a stator blade.
18. The superhydrophobic surface enhancement system of clause 16, wherein the superhydrophobic surface pattern comprises a nanostructure pattern.
19. The superhydrophobic surface enhancement system of clause 16, wherein the superhydrophobic surface pattern comprises a microstructure pattern.
20. The superhydrophobic surface enhancement system of clause 16, wherein the superhydrophobic surface pattern comprises a hierarchical pattern.

## Claims

1. A turbine engine component (110), comprising:
a metal surface (150); and
a superhydrophobic surface pattern (160) formed in the metal surface (150).

2. The component (110) of claim 1, wherein the component (110) is a steam turbine engine (10) component.

3. The component (110) of claim 1 or claim 2, wherein the component (110) comprises a stator blade or a rotor blade.

4. The component (110) of claim 1, wherein the superhydrophobic surface pattern (160) comprises a nanostructure pattern (170).

5. The component (110) of claim 4, wherein the nanostructure pattern (170) comprises a structure of about 200 nm to 2 µm.

6. The component (110) of claim 1, wherein the superhydrophobic surface pattern (160) comprises a microstructure pattern (180).

7. The component (110) of claim 6, wherein the microstructure pattern (180) comprises a structure of about 10 to 50 µm.

8. The component (110) of claim 1, wherein the superhydrophobic surface pattern (160) comprises a hierarchical pattern (190).

9. The component (110) of claim 1, wherein the superhydrophobic surface pattern (160) is formed in the metal surface (150) by an energy source (120).

10. The component (110) of claim 9, wherein the superhydrophobic surface pattern (160) is formed in the metal surface (150) by a laser (130).

11. The component (110) of claim 10, wherein the superhydrophobic surface pattern (160) is formed in the metal surface (150) by an ultra-short pulse laser (130).

12. A method of creating a superhydrophobic surface pattern (160) on a metal surface (150) of a turbine component (110), comprising:
positioning the turbine component (110) about a laser (130);
firing a pulsed energy beam (140) from the laser (130) to the metal surface (150) of the turbine component (110); and
forming the superhydrophobic surface pattern (160) on the metal surface (150) of the turbine component (110).

13. The method of claim 12, wherein the step of forming the superhydrophobic surface pattern (160) on the metal surface (150) of the turbine component (110) comprises forming a nanostructure pattern (170) on the metal surface (150) of the turbine component (110).

14. The method of claim 12, wherein the step of forming the superhydrophobic surface pattern (160) on the metal surface (150) of the turbine component (110) comprises forming a microstructure pattern (180) on the metal surface (150) of the turbine component (110).

15. The method of claim 12, wherein the step of forming the superhydrophobic surface pattern (160) on the metal surface (150) of the turbine component (110) comprises forming a hierarchical pattern (190) on the metal surface (150) of the turbine component (110).
